# EUROPEAN PATENT APPLICATION

(11) **EP 4 752 705 A1**
(43) Date of publication of application: **03.06.2026**
(21) Application number: 25204843.4
(22) Date of filing: 26.09.2025
(51) Int. Cl.: G06F 3/06

(54) **STORAGE DEVICE COMMUNICATING BACKGROUND OPERATION INFORMATION AND OPERATING METHOD OF STORAGE DEVICE AND STORAGE SYSTEM**

(30) Priority: 29.11.2024 KR 20240175824
(71) Applicant: Samsung Electronics Co., Ltd., Suwon-si, Gyeonggi-do 16677 (KR)
(72) Inventor: JANG, Yongsoo, 16677 Suwon-si (KR); OH, Jinhwan, 16677 Suwon-si (KR); JUNG, Daejin, 16677 Suwon-si (KR)
(74) Representative: Marks & Clerk LLP

(57) **Abstract**

An operating method of a storage device includes receiving first data from a host, extracting background information generated in an external storage device and indicating performance of a first background operation performed in the external storage device, from the received first data, and based on the background information, triggering a second background operation on one or more memory devices included in the storage device, wherein the storage device processes a request from the host according to a performance level which is set based on the background information, while the background operation is performed.

## Description

### BACKGROUND

The inventive concept relates to a storage device, and more particularly, to a storage device transmitting and receiving background operation information, and an operating method of a storage device and a storage system.

A storage device, such as an embedded multi-media card (eMMC), a universal flash storage (UFS), a solid state drive (SSD), and a memory card, may include non-volatile memory devices based on flash memory devices, and the storage device may store or transfer a large amount of data in a wide range of applications. The non-volatile memory devices may maintain stored data even when power is cut off.

A data processing system including storage devices may be referred to as a storage system, and the storage system may include a host and multiple storage devices. The host and multiple storage devices may be connected to each other by using various interface standards, and may communicate with each other by exchanging packets formed in accordance with a specific interface standard. The host may perform various functions by accessing data of the multiple storage devices in parallel. Accordingly, when some storage devices among the multiple storage devices experience deterioration in data access function, the host may not perform the data access function of the multiple storage devices efficiently, and overall performance of the host may be deteriorated.

### SUMMARY

A storage device communicates information related to background operations with another storage device and synchronizes the background operations for preventing overall performance deterioration of a storage system which includes the storage device. Performance deterioration may be due to some storage devices, e.g., storage devices of the storage system, being in a degraded or deteriorated state.

According to an embodiment, an operating method of a storage system, wherein the storage system comprises a first storage device and a second storage device, and the first and second storage devices are configured to communicate with a host, includes triggering a first garbage collection (GC) operation in the first storage device, transmitting, by the first storage device, first data including GC information related to the first GC operation to the host, receiving, by the second storage, second data including the GC information from the host, and extracting the GC information from the second data and, based on the GC information, performing a second GC operation on a memory device in the second storage device in synchronization with the first GC operation of the first storage device.

According to an embodiment, an operating method of a storage device configured to communicate with a host includes receiving first data from the host, extracting background information from the received first data, in which the background information is generated in an external storage device and related to a first background operation performed in the external storage device, and based on the background information, triggering a second background operation on one or more memory devices included in the storage device, wherein the storage device processes a request from the host according to a performance level which is set based on the background information during a time section from triggering of the second background operation to completion of the second background operation.

According to an embodiment, a storage device includes a non-volatile memory device, and a memory controller configured to exchange data in a form of a universal flash storage (UFS) protocol information unit (UPIU) with a host in accordance with a UFS interface standard, wherein the memory controller includes a packet manager configured to process first data received from the host and generate second data transmitted to the host; and a garbage collection (GC) manager configured to extract, from the first data, GC information generated by an external storage device and indicating that a first GC operation is performed in the external storage device, wherein the memory controller is configured to trigger a second GC operation on the memory device in synchronization with the first GC operation of the external storage device based on the GC information.

The storage device may be subsequently referred to as a second storage device, and the external storage device may be subsequently referred to as a first storage device. The performance level may be a speed of processing a request of the host, a performance ratio of an internal input/output command related to a first background operation to a host input/output operation related to processing a request from the host, and performance speed of a storage device, e.g., speed of performing a host request or background operation.

At least some of the above and other features of the disclosure are set out in the claims.

### BRIEF DESCRIPTION OF THE DRAWINGS

Embodiments will be more clearly understood from the following detailed description taken in conjunction with the accompanying drawings in which:
FIG. 1 is a block diagram of a storage system according to an embodiment;
FIGS. 2A and 2B are block diagrams of storage systems according to embodiments;
FIG. 3 is a block diagram of an implementation example of a host according to an embodiment;
FIG. 4 is a block diagram of an implementation example of a storage device according to an embodiment;
FIGS. 5A, 5B, and 5C are diagrams of examples of storage devices communicating garbage collection (GC) information in various forms;
FIG. 6 is a diagram illustrating a communication method for GC information according to an embodiment;
FIG. 7 is a diagram of an example of exchanging GC information between storage devices;
FIG. 8 is a block diagram of a storage system according to an embodiment;
FIG. 9 is a flowchart of an operating example of the storage system illustrated in FIG. 8;
FIG. 10 is a block diagram of an example of operation of a storage device according to an embodiment;
FIGS. 11A, 11B, and 11C are implementation examples of a universal flash storage (UFS) protocol information unit (UPIU) according to embodiments;
FIGS. 12 to 14, 15A and 15B are diagrams illustrating operation of a storage system according to embodiments; and
FIG. 16 is a diagram of a UFS system according to an embodiment.

### DETAILED DESCRIPTION OF THE EMBODIMENTS

Hereinafter, embodiments of the inventive concept will be described in detail with reference to the accompanying drawings.

Ordinal numbers such as "first," "second," "third," etc. may be used simply as labels of certain elements, steps, etc., to distinguish such elements, steps, etc. from one another. Terms that are not described using "first," "second," etc., in the specification, may still be referred to as "first" or "second" in a claim. In addition, a term that is referenced with a particular ordinal number (e.g., "first") in a particular claim may be described elsewhere with a different ordinal number (e.g., "second") in the specification or another claim.

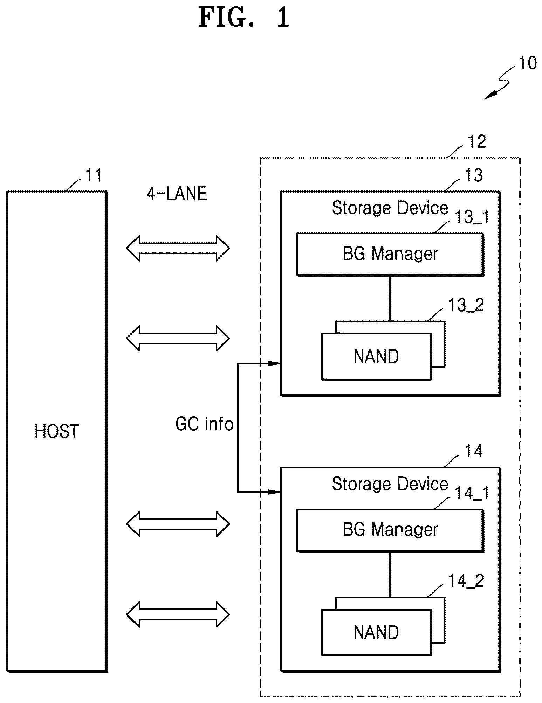

FIG. 1 is a block diagram of a storage system 10 according to an embodiment.

Referring to FIG. 1, the storage system 10 may include a host 11 and multiple devices, and each of the multiple devices may be a semiconductor device storing data and communicating with the host 11. The host 11 and the multiple devices may communicate with each other through various types of interfaces. For example, when a universal flash storage (UFS) is applied to the storage system 10, the host 11 may be a UFS host, and each of the multiple devices may be a UFS device. When each of the multiple devices includes a non-volatile memory device such as a flash memory, the device may be used as a storage device. A first storage device 13 and a second storage device 14 illustrated in FIG. 1 may correspond to the multiple devices.

According to an example embodiment, each of the first and second storage devices 13 and 14 may be implemented in separate semiconductor chips and mounted on a single memory package 12. In addition, each of the first and second storage devices 13 and 14 may include a memory controller and one or more memory devices (or, memory cores). The memory controller may access to the memory device to perform various operations such as program operation, read operation, erase operation, and other maintenance operation according to a request from the host 11. Referring to FIG. 1, the memory device, for example, may be NAND memories. The memory controller and the memory device may be implemented in a single semiconductor chip, or separately in different semiconductor chips. Each of the first and second storage devices 13 and 14 described above may also be referred to as a memory system, because each of the first and second storage devices 13 and 14 includes the memory controller and the memory device.

The host 11 may be connected to the first and second storage devices 13 and 14 via one or more lanes LANE. Each of the first and second storage devices 13 and 14 may communicate with the host 11 by exchanging requests and data via a corresponding lane. For example, the storage system 10 of FIG. 1 may have four-lanes LANE. Each lane may include a transmission lane and a reception lane (not illustrated), and the host 11 may communicate with each of the first and second storage devices 13 and 14 through corresponding lane in a dual method or in a full-duplex method, based on a lane structure in which the transmission lane and the reception lane are separated.

According to an embodiment, each of the first and second storage devices 13 and 14 may include a background information manager. For example, the first storage device 13 may include a first background information manager (BG manager) 13_1, and the second storage device 14 may include a second BG manager 14_1. A background information manager may be implemented within a memory controller of a storage device. A background information manager may manage one or more background operations. A background operation may include various operations performed inside the storage device regardless of a request of a host. A background operation may include various operations performed entirely within the storage device. A background operation may include various operations performed automatically, i.e., without instruction from a host. For example, the background operation may include a garbage collection operation, reclamation operation, a wear leveling operation, and other maintenance operations. In addition, background information may include details about various background operations. For example, the background information may include types, performance state/characteristics, or the speed of the background operations.

The storage system 10 may support various types of interfaces. For example, the storage system 10 may support a universal serial bus (USB), a multi-media card (MMC), peripheral component interconnection (PCI), PCI-express (PCI-E), advanced technology attachment (ATA), serial-ATA, parallel-ATA, an enhanced small disk interface (ESDI), integrated drive electronics (IDE), Firewire, non-volatile memory express (NVMe), and a universal flash storage (UFS).

According to some embodiments, the memory package 12 may be a memory embedded in an electronic device or a removable memory, and the memory package 12 may be implemented in various different forms depending on applications. For example, the memory package 12 may be an embedded UFS memory device, an embedded MMC (eMMC), a solid state drive (SSD), a UFS memory card, a compact flash (CF) card, a secured digital (SD) card, a micro-SD card, a mini-SD card, an extreme digital (xD) card, and a memory stick.

According to an embodiment, each of the first and second storage devices 13 and 14 may include a three-dimensional (3D) memory cell array, the 3D memory cell array may include a plurality of NAND strings, and each NAND string may include the memory cells vertically stacked on a substrate and connected to corresponding word lines WL. However, the inventive concept is not limited thereto. The memory cell array may include a two-dimensional (2D) memory cell array, and the 2D memory cell array may include the plurality of NAND strings arranged in row and column directions. Although a NAND memory cell is widely used as a non-volatile memory cell, the memory cell array may include various different types of non-volatile memory cells, such as resistive random access memory (ReRAM), phase change RAM (PRAM), and magneto-resistive RAM (MRAM).

According to embodiments, the host 11 and the first and second storage devices 13 and 14 may generate and exchange packets according to the protocol of the UFS interface, in which the packets may include data. However, the embodiments of the inventive concept are not limited thereto, and various other types of interfaces may be applied to the embodiments of the inventive concept. Each of the host 11 and the first and second storage devices 13 and 14 may transmit and receive packets. Exchanging data between the host 11 and the first and second storage devices 13 and 14 may be refer to the host 11 transmitting and receiving data to and from the first and second storage devices 13 and 14. The term "data" may indicate an actual data accessed from a memory cell array, or may indicate overall information communicated by the host 11 and the first and second storage devices 13 and 14, in which the term "data" may include packets or protocol information necessary for enabling a communication between the host 11 and the first and second storage devices 13 and 14.

According to embodiments, the host 11 and the first and second storage devices 13 and 14 may further exchange background information for performing various types of background operations. For example, the background information may include garbage collection information, hereinafter garbage collection information may be described as GC information or GC Info, and garbage collection operation may be described as GC operation.

When the first storage device 13 triggers a first GC operation or is performing a first GC operation, the first storage device 13 may generate first GC information related to the first GC operation performed in the first storage device 13 and transmit the first GC information to the second storage device 14. Upon receiving the first GC information from the first storage device 13, the second storage device 14 may perform a second GC operation based on the first GC information from the first storage device 13, in which the second storage device 14 may synchronize the second GC operation to the first GC operation of the first storage device 13.

A GC operation may be performed by copying effective or valid data stored in multiple source blocks to one object block, and by erasing the multiple source blocks to secure free blocks. Accordingly, a memory controller of a storage device may perform internal input/output (IO or I/O) operation on a memory device related to the GC operation regardless of a request of a host. In addition, the storage device may perform a host IO operation in response to the request of the host while internal I/O operation for the GC operation are being performed. Accordingly, during a period between a time point at which the GC operation is triggered and a time point at which the garbage collection operation is terminated, the storage device may need to select an operation to be performed with priority between the internal IO operation for the GC operation and the host IO operation for processing a request from the host because the internal IO operation and the host IO operation may not be performed in parallel. The storage device may select to perform the internal IO operation first when a number of free blocks in the storage device is not sufficient (e.g., not sufficient to perform the host IO operation), or the storage device may select to perform the host IO operation first when a request from the host is required to be performed with priority.

On the other hand, a performance ratio between the internal IO operation and the host IO operation may be set to a specific value. When the performance ratio of the host I/O operation is high, the host I/O operation may be performed more frequently and the request from the host may be processed faster. Therefore, overall performance of the storage device may be improved. However, the stability of the data may be slightly reduced as the speed of the GC operation decreases. When the performance ratio of the host IO operation is low, the host I/O operation may be performed less frequently and the request from the host may be processed more slowly. Therefore, overall the performance of the storage device may be reduced. However, the stability of the data may be increased as the speed of the GC operation increases.

The GC information may include information indicating whether the background operation is the GC operation or not, and may further include information indicating the number of free blocks in a storage device, the performance speed of the GC operation, the processing performance of the request of the host, etc. For example, when the first storage device 13 transmits the first GC information to the second storage device 14, the first background information manager 13_1 may encrypt the first GC information, and the second background information manager 14_1 may decrypt the received first GC information.

The memory package 12 may support on-device AI, and the host 11 may allocate data access to the first and second storage devices 13 and 14 for processing a specific function such as an AI operation set. For example, learning data may be categorized into multiple sets. After the data from any set is stored in both the first and second storage devices 13 and 14, the host 11 may then process data from the other sets. When the performance frequency of the host IO operation decreases for performing the GC operation in the first storage device 13, regardless of whether the second storage device 14 performs the data access operation at a high performance level, the processing performance of multiple sets may be deteriorated due to the lower performance of the first storage device 13. For example, when a first time section, in which the first storage device 13 performs the first GC operation, does not overlap with a second time section in which the second storage device 14 performs the second GC operation, the first and second storage devices 13 and 14 may not operate at high performance level during both the first time section and the second time section, and a third time section in which both the first and second storage devices 13 and 14 may operate at high performance level may be reduced, thereby reducing overall performance of the host while the host 11 is performing a specific function. Time section may refer to a duration of time or a time period.

According to an embodiment of the inventive concept, the second storage device 14 may synchronize the second GC operation to the first GC operation of the first storage device 13 based on the GC information received from the first storage device 13. Therefore, time sections in which the first and second storage devices 13 and 14 perform the GC operation may be overlapped, and the time sections (e.g., the duration of time) in which both the first storage devices 13 and the second storage device 14 may operate at high performance level may be increased. Accordingly, overall performance of the host 11, while executing the specific function, may be improved.

In addition, the first and second storage devices 13 and 14 may communicate the background operation information in various types of formats. For example, the first and second storage devices 13 and 14 may generate a command through a separate interface, and the background operation information may be included in the command. The command for communicating between the first and second storage devices 13 and 14 through the separate interface may be an internal command which is different from a command for communicating between the first and second storage devices 13 and 14 and the host 11. The internal command may have a format in accordance with the UFS interface standard. Alternatively, the internal command may be implemented in a command form that is a part of a command set defined by the SCSI interface standard, or a higher-level host command form or a lower-level command form defined in inter-process communication (IPC) protocol.

Alternatively, the first and second storage devices 13 and 14 may exchange the background operation information in a payload form. For example, when the first and second storage devices 13 and 14 exchange the internal command, the packet transmitted by the host 11 to the first and second storage devices 13 and 14 may not contain the internal command. Instead, the host 11 may transmit the internal command extracted from the packet received from a storage device to another storage device. On the other hand, when the first and second storage devices 13 and 14 exchange the payload, the packet transmitted by the host 11 to the first and second storage devices 13 and 14 may include the payload.

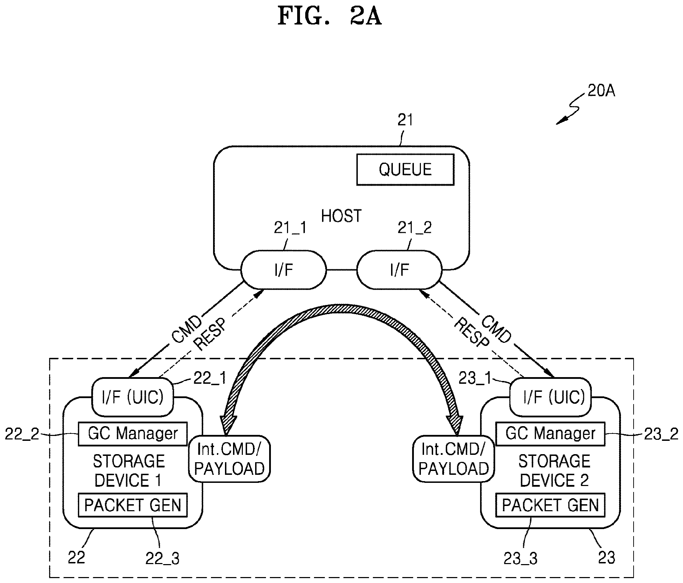

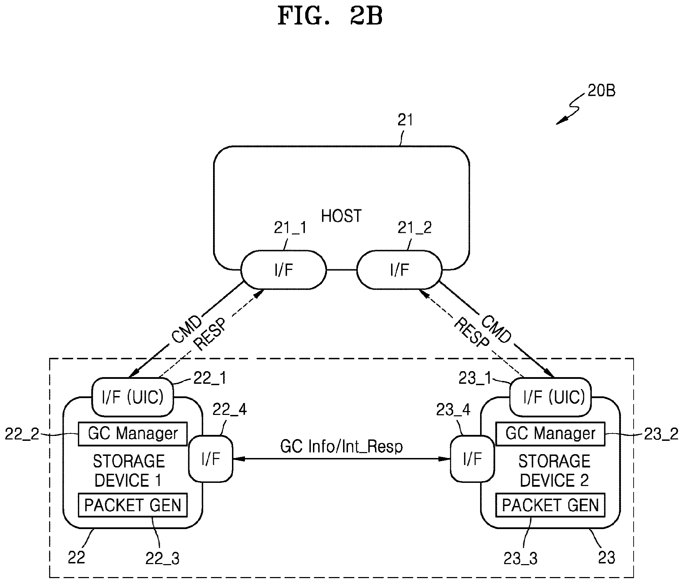

FIGS. 2A and 2B are block diagrams of storage systems 20A and 20B respectively, according to embodiments.

Referring to FIG. 2A, the storage system 20A may include a host 21 and first and second storage devices 22 and 23. The host 21 and each of the first and second storage devices 22 and 23 may include at least one interface circuit. For example, the host 21 may include a first interface circuit 21_1 and the first storage device 22 may include an interface circuit (I/F) 22_1, in which the host 21 and the first storage device 22 may communicate with each other through the first interface circuit 21_1 and the interface circuit (I/F) 22_1. The host 21 may further include a second interface circuit 21_2 and the second storage device 23 may include an interface circuit 23_1, in which the host 21 and the second storage device 23 may communicate with each other through the second interface circuit 21_2 and the interface circuit (I/F) 23_1. An interface circuit I/F provided in each of the host 21 and the first and second storage devices 22 and 23 may include a UFS interconnection layer (UIC) in accordance with the UFS interface standard. In addition, the UIC may include a link layer such as unified protocol (UniPro) defined by mobile industry processor interface (MIPI) alliance, and a physical layer such as MIPI physical layer (M-PHY).

The host 21 and the first and second storage devices 22 and 23 may communicate with each other by exchanging UFS protocol information units (UPIUs) as packets in accordance with the UFS interface standard, and the UPIUs may include a command CMD UPIU and a response RESP UPIU. For example, the host 21 may transmit the command CMD UPIU to the first storage device 22 and the second storage device 23, and in response thereto, the first storage device 22 and the second storage device 23 may transmit the response RESP UPIU to the host 21.

According to an embodiment, the first and second storage devices 22 and 23 may exchange GC information via the host 21. Each storage device may include a packet generator. For example, each of a first packet generator 22_3 of the first storage device 22 and a second packet generator 23_3 of the second storage device 23 may generate the response RESP UPIU in response to the command CMD UPIU from the host 21. In addition, the first storage device 22 may include a first garbage collection (GC) manager 22_2, the second storage device 23 may include a second GC manager 23_2, and each GC manager may compose GC information for a packet to be transmitted to a host, or extract GC information from a packet received from the host 21. For example, the first storage device 22 may transmit the GC information to the second storage device 23, in which a packet transmitted to the host by the first storage device 22 may include the GC information in a payload form, and the second storage device 23 may extract the GC information from the packet received from the host 21, in which the GC information is included in the packet in the payload form.

For example, a packet of the UPIU format may include a header region, extra header segment (EHS), hereinafter, referred to as an EHS region, and a payload region, and the GC information may be included in at least a portion of the header region and the EHS region of the packet. The header region and the EHS region of the packet may include a field for containing information that is not necessary for communicating with the host 21. For example, the field may be a reserved region, and the GC information may be included in the reserved region of the packet.

According to an embodiment, the host 21 may include one or more queues storing communication information between the first and second storage devices 22 and 23. For example, in addition to transmitting the GC information, storage devices also transmit an internal response Int_Resp confirming reception of the GC information. Upon receiving the GC information and the internal response Int_Resp, the host 21 may store the GC information and the internal response Int_Resp in the one or more queues. When the host 21 transmits the UPIU to the storage devices, the host 21 may retrieve information stored in the queues, and may include the GC information or the internal response Int_Resp in the UPIU.

The storage device providing the GC information may be a source storage device, and the storage device receiving the GC information may be a destination storage device. For example, the first storage device 22 may include an identification (ID) value indicating the second storage device 23 as the destination storage device in the packet, along with the GC information. The host 21 may determine a storage device to which the GC information may be transmitted based on the ID value included in the received packet. In addition, when the first and second storage devices 22 and 23 communicate an internal command Int CMD, a value indicating a format of the internal command Int CMD may be included in the packet to be transmitted to the host 21. The ID value of the storage device and the value indicating the format of the internal command Int CMD may be included in the header region of the packet.

Alternatively, the GC information may also be directly communicated between storage devices as illustrated in FIG. 2B. For example, in the storage system 20B, the first storage device 22 may include an interface circuit I/F 22_4 for communicating with the second storage device 23, and the second storage device 23 may include an interface circuit I/F 23_4 for communicating with the first storage device 22. The interface circuits for communication between the first storage device 22 and the second storage device 23 may be implemented in various types of interfaces. Accordingly, the host 21 may not need to include a queue storing the GC information.

According to an embodiment of the inventive concept, because a time section in which all or many of the storage devices operate at high performance level may be increased, the overall performance of the storage system may be improved. According to embodiments of the inventive concept, a redundant array of independent disk 0 (RAID0) may be proposed to expand capacity and increase data bandwidth by accommodating multiple storage devices in the storage system. Accordingly, an operational efficiency of the storage system may be improved in such an environment that the storage system accommodates the multiple storage devices.

Furthermore, the GC information may be exchanged between the storage devices via a host or through direct communication interface. Although embodiments in which the GC information is exchanged via the host are described, following description may also be applied to embodiments in which the storage devices exchange the GC information through direct communication interface.

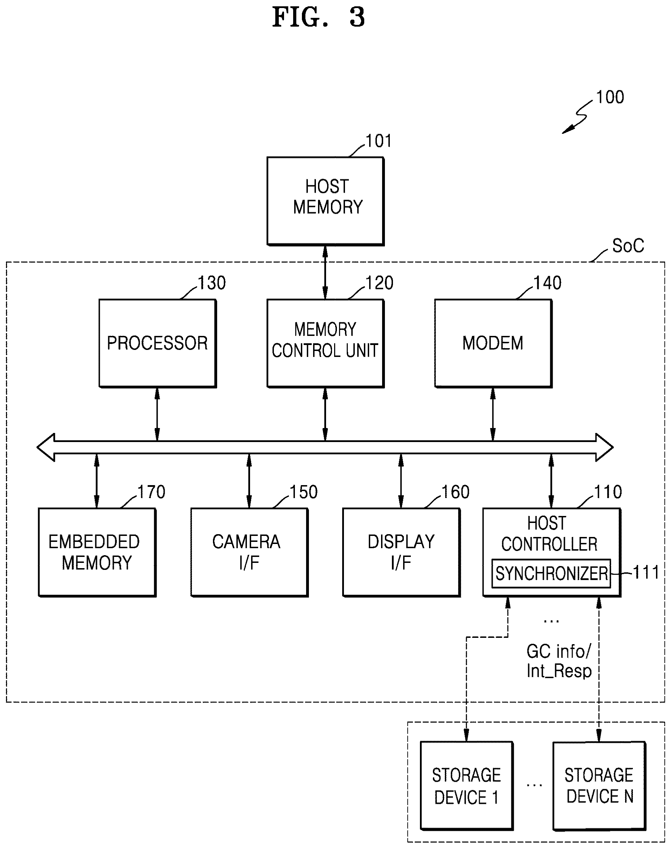

FIG. 3 is a block diagram of an implementation example of a host 100. Referring to FIG. 3, the host 100 includes a system on chip SoC and a host memory 101, and a processor 130 controls a memory operation by executing software stored in the host memory 101. Alternatively, the host memory 101 may be integrated into the SoC, or an embedded memory 170 may include the function of the host memory 101. In addition, the system on chip SoC may include an application processor (AP).

Referring to FIG. 3, the system on chip SoC may include a host controller 110, a memory control unit 120, the processor 130, a modem 140, a camera interface circuit (I/F) 150, a display I/F 160, and the embedded memory 170.

The processor 130 may control overall operation of the system on chip SoC. For example, software , such as host application and device driver, for managing data related to write/read operations for storage devices may be loaded into the host memory 101. By executing the software, the processor 130 may manage data related to write/read operations. The host memory 101 may be implemented as a volatile memory or a non-volatile memory, and may include a volatile memory, such as dynamic random access memory (DRAM) and/or static RAM (SRAM).

The system on chip SoC may include the modem 140, the camera interface circuit 150, the display interface circuit 160, or the like, and accordingly, may perform a camera control operation, a display control operation, a communication operation, etc. Because the modem 140 is included in the system on chip SoC corresponding to the AP in FIG. 3, the system on chip SoC may be referred to as a modem AP (ModAP).

The host controller 110 may exchange the packet with the storage devices according to the embodiment described above. The host controller 110 may include a packet manager (not illustrated) generating and processing a packet to be exchanged with the storage devices. For example, a UFS Transport Protocol (UTP) engine defined in the UFS interface may include a function of the packet manager. In response to an access request generated on a host application layer of the system on chip SoC, the host controller 110 may generate a packet according to a specific interface adopted by the host, and transmit the generated packet to corresponding storage device among the multiple storage devices. For example, the memory package may include first through N^{th} storage devices, and the host controller 110 may include N interface circuits corresponding to the first to N^{th} storage devices. Each of the N interface circuits may be UFS interconnection layer (UIC).

In addition, the host controller 110 may include a synchronizer 111. The synchronizer 111 may control the operation of transmitting the GC information and/or internal response Int_Resp provided by the source storage device to the destination storage device. Accordingly, at least some of the first to N^{th} storage devices may perform the GC operations in synchronization with each other. For example, based on the control of the synchronizer 111, some packets generated by the packet manager and transmitted to corresponding storage devices may include the GC information and/or the internal response Int_Resp, and other packets generated by the packet manager and transmitted to corresponding storage devices may not include the GC information and/or the internal response Int_Resp.

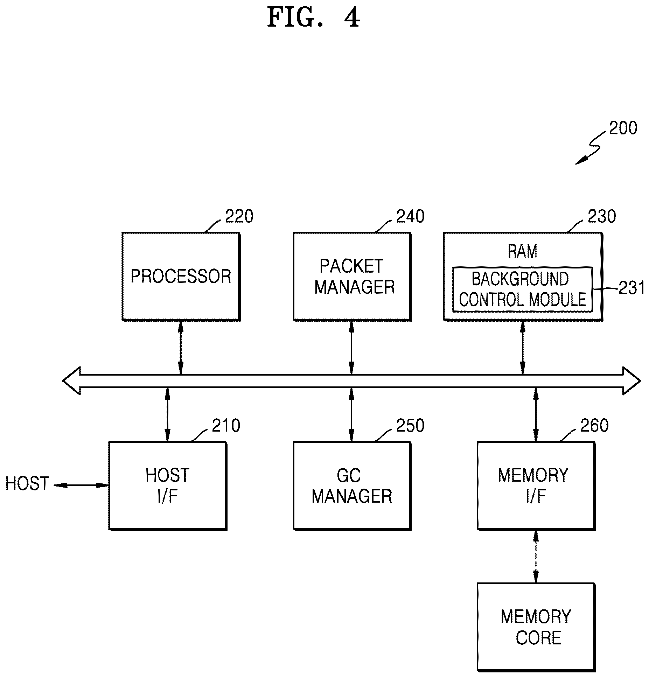

FIG. 4 is a block diagram of an implementation example of a storage device according to an embodiment.

Referring to FIG. 4, the storage device may include a memory controller 200 and a memory core 270. The memory controller 200 may include a host I/F 210, a processor 220, RAM 230, a packet manager 240, a GC manager 250, and a memory I/F 260. In addition, the RAM 230 may be used as a working memory, and the processor 220 may control overall operation of memory controller 200 by executing firmware loaded in the RAM 230. The RAM 230 may be implemented using various types of memories, such as DRAM, SRAM, and a resistive memory device. The RAM 230 may also play a role of a cache memory in the memory controller 200. The firmware may include a flash transformation layer (FTL). The flash transformation layer (FTL) may be loaded into the RAM 230, and various functions related to a flash memory operation may be performed through the FTL. The FTL may include background operation instructions performed in a background control module 231, in which the processor 220 may control various types of background operations including the garbage collection operation on the memory core 270 by executing the background operation instructions in the background control module 231.

The host interface 210 may transmit a packet to the host, and may receive the packet from the host. The packet may include the GC Information generated by the storage device. The packet manager 240 may generate a packet based on a protocol agreed upon with the host, or may extract various information from the packet received from the host. When the GC operation of the storage device is triggered or performed, the GC manager 250 may generate the GC information and provide the generated GC information to the packet manager 240. In addition, the GC manager 250 may extract the GC information GC Info from the packet received from the host. When the storage device receives a packet including the GC information of another storage device, the storage device may synchronize the GC operation of the storage device to the GC operation of another storage device based on the GC information extracted from the packet.

The memory I/F 260 may provide a physical connection between the memory controller 200 and the memory core 270. For example, the memory controller 200 may provide a command/address and a control signal to the memory core 270 via the memory I/F 260 to control memory operations including the host I/O operation and the internal I/O operation. In addition, write data and read data may be transmitted and received between the memory controller 200 and the memory core 270 via the memory I/F 260.

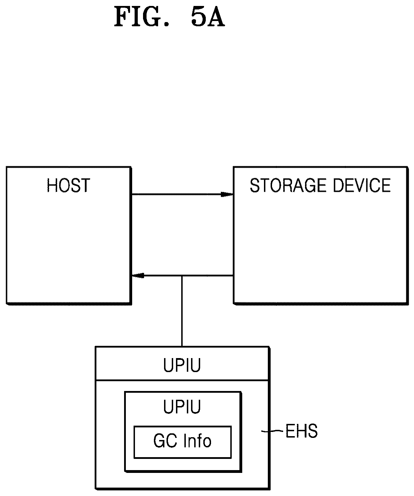

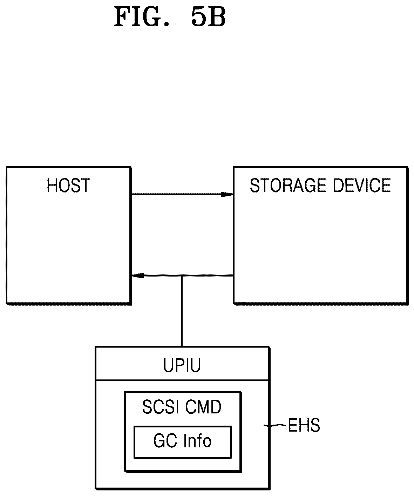

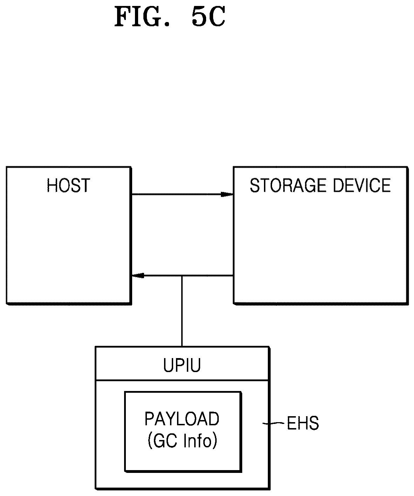

FIGS. 5A, 5B, and 5C are diagrams of examples of storage devices communicating GC information in various forms.

Referring to FIG. 5A, the storage device may communicate with a host UPIU according to the UFS interface, and the information communicated between the storage devices also have the UPIU format according to the UFS interface standard. The storage device may generate UPIU as an internal command and include GC information in the internal command. In addition, the storage device may generate a packet of a UPIU format for communication with the host, and include the UPIU as the internal command in a particular region (for example, the EHS region) of the packet to be transmitted to the host.

Referring to FIG. 5B, the internal command may be communicated between the storage devices. For example, the internal command, referred to as a SCSI CMD, may be in accordance with an SCSI interface standard. The GC information may be included in a command according to the SCSI interface, and the internal command may be included in the EHS region of the packet transmitted to the host. In addition, Referring to FIG. 5C, the storage devices may exchange information in a payload form, and the GC information of the payload form may be included in the EHS region of the packet transmitted to the host. According to the embodiments of FIGS. 5A, B, and C, a value indicating the format of information communicated between the storage devices may be included in a particular region (for example, header region) of the packet transmitted to the host.

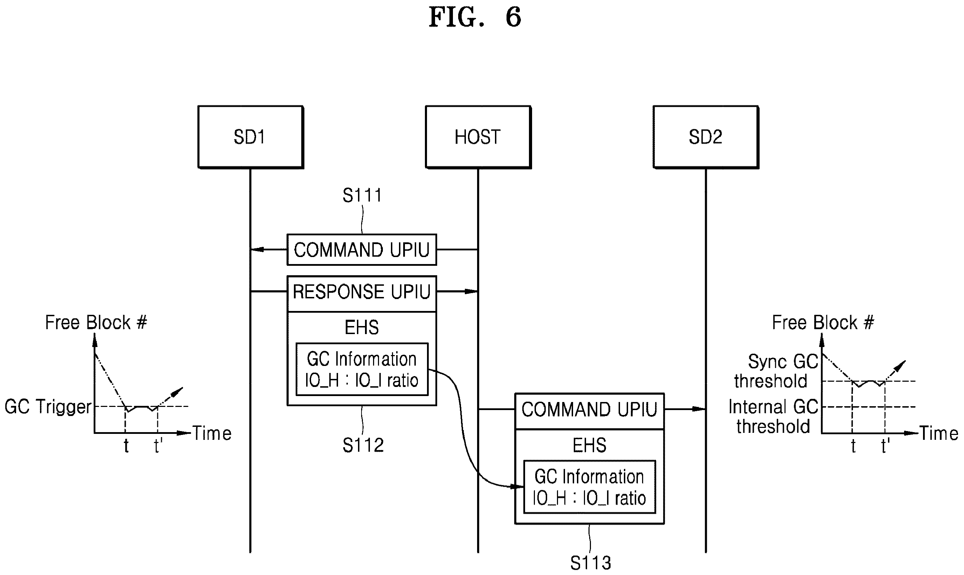

FIG. 6 is a diagram illustrating a communication method of the GC information according to an embodiment. Referring to FIG. 6, a host communicates with first and second storage devices SD1 and SD2, and the first storage device SD1 transmits GC information to the second storage device SD2.

The host may exchange various commands and responses with the first and second storage devices SD1 and SD2 for data access. For collecting garbage information from the first storage device SD1, the host may transmit a command CMD UPIU to the first storage device SD1 (S111). The first storage device SD1 may transmit a response RESP UPIU to the host in response to the received command CMD UPIU (S112).

The first storage device SD1 may perform write operations writing data into free blocks in response to a request from the host Accordingly, the number of free blocks of the first storage device SD1 may be gradually decreased. The first storage device SD1 may set a first threshold value, in which, when the number of free blocks becomes below the first threshold value, a garbage collection (GC) operation is triggered. The first threshold value may be a reference value for determining for the first storage device SD1 to trigger the GC operation. The first storage device SD1 may generate the GC information, and may include the generated GC information in the EHS region of the response RESP UPIU to be transmitted to the host. Referring to FIG. 6, information indicating a ratio of a host input/output IO_H to an internal input/output IO_I may be included in the GC information. The ratio of the host input/output IO_H to the internal input/output IO_I may be defined as performance information, and the performance information may indicate the speed of the GC operation or the processing performance of the host request.

The GC Information to be transmitted by the first storage device may be set differently based on some criteria. For example, when the GC operation is triggered and the internal input/output IO_I is being processed, the first storage device SD1 may generate and transmit the GC information to the host accordingly. Alternatively, the GC information to be transmitted to the host may be set to indicate that the triggering of the GC operation is imminent rather than the GC operation is triggered, even when the number of free blocks of the first storage device SD1 is equal to or less than a first threshold value, not only when the number of free blocks is greater than the first threshold value.

The second storage device SD2 may receive the command CMD UPIU from the host (S113), and may extract the GC Information from the received command CMD UPIU. The second storage device SD2 may synchronize the second GC operation to the first GC operation of the first storage device SD1. Accordingly, even when the number of free blocks of the second storage device SD2 is not less than the first threshold value, the second storage device SD2 may trigger the GC operation. According an embodiment, a second threshold value may be set as a reference below which the second storage device SD2 may trigger the second GC operation to synchronize the second GC operation to the first GC operation of the first storage device SD1. The second threshold value may be greater than the first threshold value. Therefore, the second storage device SD2 performs the second GC operation based on the GC Information from the first storage device SD1, and when the number of free blocks of the second storage device SD2 is equal to or less than the second threshold value, the second storage device SD2 may trigger the second GC operation. In addition, by referring to the GC Information from the first storage device SD1, the second storage device SD2 may synchronize the GC speed or the processing performance of the host request (i.e., the performance of processing the host request) with the first storage device SD1. Accordingly, the second storage device SD2, based on the processing performance of the first storage device SD1, may perform the data access in response to the request of the host.

According to an embodiment, the first storage device SD1 may start to perform the GC operation at a time point t, at which the GC operation is triggered, and may end performing the GC operation at a time point t', at which the number of free blocks becomes equal to or greater than the first threshold value. In addition, the second storage device SD2 may synchronize the second GC operation to the first GC operation of the first storage device SD1 by triggering the garbage collection operation when the number of free blocks is equal to or less than the second threshold value. Accordingly the second storage device SD2 may trigger the second GC operation as the number of free blocks is equal to or less than the second threshold value at the time point t. Although the time point t and the time point t', in each of the GC operations of the first and second storage devices SD1 and SD2, are illustrated as the same, the time point may be differently set in the first and second storage devices SD1 and SD2. For example, as the second storage device SD2 triggers the GC operation after receiving the command CMD UPIU including the GC Information from the first storage device SD1, a triggering time point of the GC operation of the second storage device SD2 may be delayed with respect to the time point t, in which a time section of the GC operation of the first storage device SD1 and that of the second storage device SD2 may overlap each other. Alternatively, a trigger time point and an end time point of the GC operation of the second storage device SD2 may be changed differently from those of the first storage device SD1.

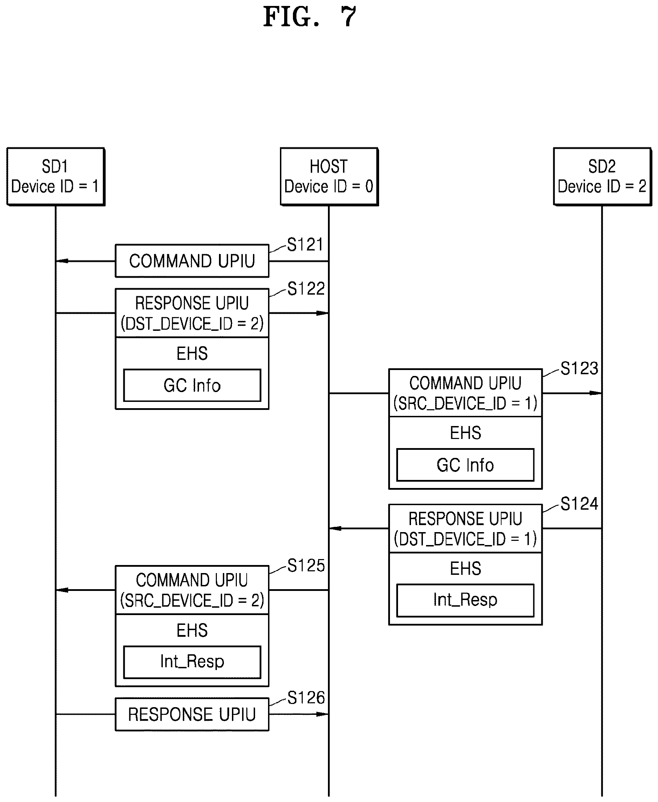

FIG. 7 is a diagram of an example of exchanging the GC information between the storage devices.

According an embodiment, an ID value may be allocated to each of the host and the first and second storage devices SD1 and SD2. For example, ID values corresponding to "0", "1", and "2" may be respectively allocated to the host, the first storage device SD1, and the second storage device SD2. The host may transmit the command CMD UPIU to the first storage device SD1 (S121), the first storage device SD1 may transmit the response RESP UPIU to the host (S122), and the GC information may be included in the EHS region of the response RESP UPIU. In addition, an ID value of the destination storage device may be included in the header region of the response RESP UPIU. For example, the ID value corresponding to "2" indicating the second storage device SD2 may be included in the header region of the response RESP UPIU.

The host may extract the GC information from the response RESP UPIU, and store the GC information GC Info in a queue within the host. The host may include the GC information in a command CMD UPIU to be transmitted to the second storage device SD2 (S123), and may also include the ID value corresponding to "1" in the header region of the command CMD UPIU. The ID value corresponding to "1" may indicate the first storage device SD1 as a source storage device. The first storage device SD1 may transmit a response UPIU including the GC information to the host, and the host may extract the GC information and include it in a command UPIU, and transmit the command UPIU to the second storage device SD2. The second storage device SD2 may extract the GC information from the received command CMD UPIU, and based on the extracted GC information, may perform the GC operation synchronized to the first storage device SD1.

According to an embodiment, the second storage device SD2, based on the received GC information, may generate the internal response Int_Resp as a response to the command CMD UPIU, and may transmit the generated internal response Int_Resp to the first storage device SD1 (S124). The second storage device SD2 may include the internal response Int_Resp in the response RESP UPIU that responds to the command CMD UPIU from the host, and may include the ID value corresponding to "1" indicating the first storage device SD1, as the destination storage device, in the header region of the response RESP UPIU. The internal response Int_Resp may be implemented in various forms of commands, and may also be implemented in a payload form.

The host may include the internal response Int_Resp in a command CMD UPIU transmitted to the first storage device SD1 (S125), and may include the ID value corresponding to "2" indicating the second storage device SD2, as the source storage device, in the header region of the command CMD UPIU. In addition, the first storage device SD1 may transmit to the host the response RESP UPIU responding to the command CMD UPIU from the host (S126).

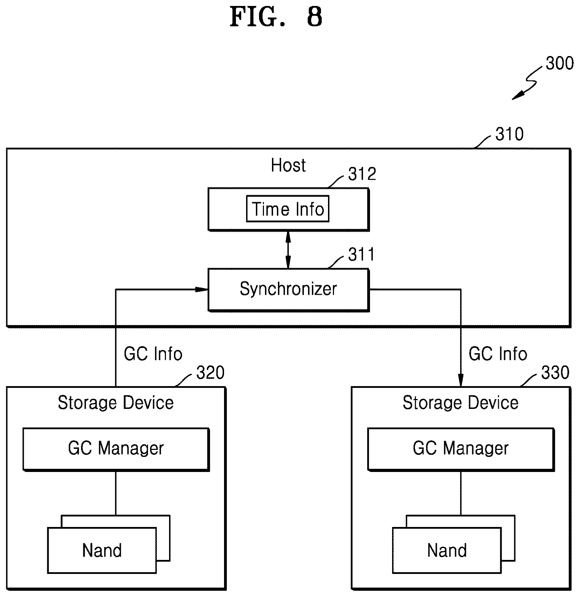

FIG. 8 is a block diagram of a storage system 300 according to an embodiment.

The storage system 300 may include a host 310 and multiple storage devices, and each of the multiple storage devices may include the GC manager implemented within a memory controller and one or more memory devices such as NAND memories. In addition, the multiple storage devices may exchange the GC information with one another, and the GC information may be transmitted to the destination storage device via the host 310.

The host 310 may include a synchronizer 311 and a storage circuit 312. The synchronizer 311 may manage transmission of the GC information between the storage devices, and based on the control of the synchronizer 311, time information Time Info corresponding to the GC information may be stored in the storage circuit 312. For example, the time information Time Info may indicate a time point at which the GC operation is triggered in the source storage device, or may indicate a time point at which the host 310 receives the GC information.

The synchronizer 311 of the destination storage device may identify the time information Time Info corresponding to the GC information when the GC information is transmitted to the destination storage device. The synchronizer 311 may evaluate the elapsed time from the time point of generating the GC information to the present time point or to the time point of transmitting the GC information GC Info, and compare the elapsed time to a predefined effective time. For example, when the elapsed time does not exceed the predefined effective time, the synchronizer 311 may include the GC information in the UPIU transmitted to the destination storage device. However, when the elapsed time exceeds the predefined effective time, the synchronizer 311 may not include the GC information in the UPIU transmitted to the destination storage device.

During the initial driving time of the storage system 300, the predefined effective time, which is used as a reference for determining whether GC information is to be transmitted, may be transmitted from the storage devices to the host 310. For example, during the initial driving time of the storage system 300, the storage devices may transmit specific attribute including information related to the driving environment to the host 310. The host 310 may extract information related to the predefined effective time from the vendor specific attribute, and may store the extracted information in the host 310.

According to the embodiment, when a longer time than the predefined effective time has elapsed after a source storage device transmits the GC information, the GC operation of the source storage device may have been completed, or the processing performance with respect to the host request of the source storage device may have been changed. Accordingly, even though the destination storage device receives the GC information from the source storage device, and performs the GC operation in synchronization with the GC operation of the source storage device, the source storage device and the destination storage device may not secure sufficient time sections, in which both the source storage device and the destination storage device perform the GC operations at the same time, or may not accurately synchronize the processing performance. Therefore, based on comparison result between the elapsed time and the predetermined effective time, transmission of the GC information to the destination storage device may be selectively performed.

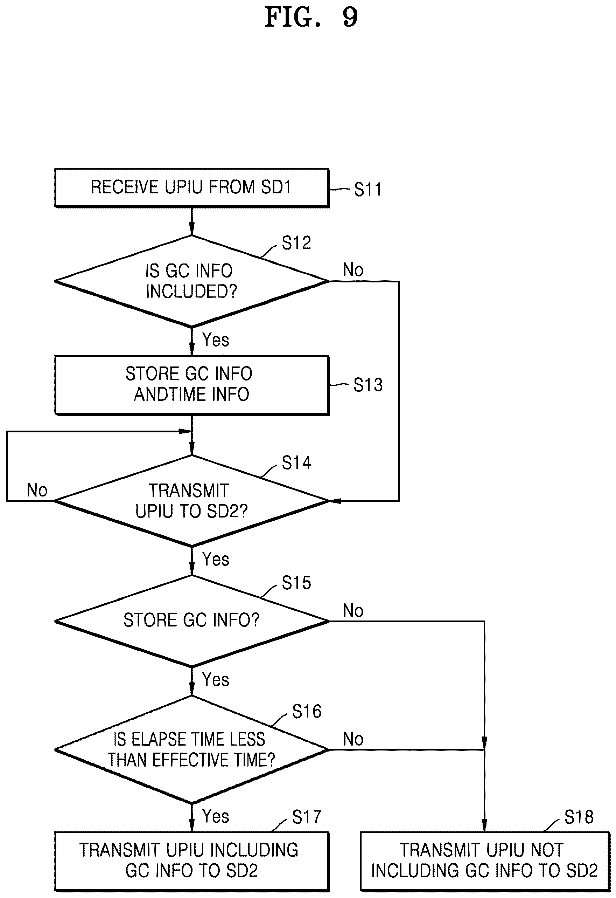

FIG. 9 is a flowchart of an operating example of the storage system 300 illustrated in FIG. 8. The operations illustrated in FIG. 9 may be performed by the host.

Referring to FIG. 9, the host may receive the UPIU from the first storage device SD1 (S11), and determine whether the GC information GC Info is included in the received UPIU (S12). When the GC information GC Info is included, the host may store the GC information and the time information Time Info in a storage circuit of the host (S13).

Thereafter, the host may determine whether the UPIU to be transmitted to the second storage device SD2 is stored (S14), and then, may determine whether the GC information to be transmitted to the second storage device SD2 is stored (S15). When the GC information to be transmitted to the second storage device SD2 is stored, the host may determine whether the elapsed time is less than the predefined effective time by referring to the time information Time Info corresponding to the GC information (S16). When the elapsed time is less than the effective time, the host may transmit the UPIU including the GC information to the second storage device SD2 (S17).

On the other hand, when the GC information GC Info to be transmitted to the second storage device SD2 is not stored, or the elapsed time is not less than the predetermined effective time, the host may transmit the UPIU which does not include the GC information to the second storage device SD2 (S18).

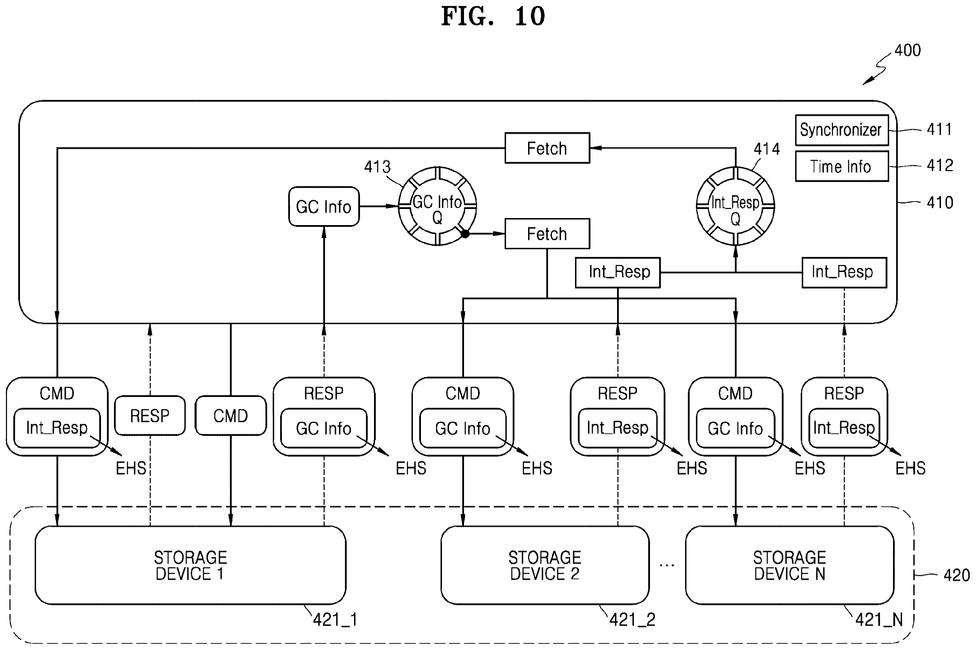

FIG. 10 is a block diagram of an example of operation of a storage system 400, according to an embodiment. Referring to FIG. 10, the host 410 illustrates the operation of the host controller. a storage operation and a fetch operation of the GC information and the internal response Int_Resp may be controlled by a synchronizer 411 according to the embodiments described above, and the time information Time Info corresponding to the GC information may be stored in a storage circuit 412.

Referring to FIG. 10, the storage system 400 may include the host 410 and first to N^{th} storage devices N 421_1 to 421_N. In addition, the host 410 may include a first queue 413 storing the GC information received from the storage devices and a second queue 414 storing the internal response Int_Resp received from the storage devices.

When the storage device 1 421_1 transmits the GC information, the storage device 1 421_1 may receive the command CMD UPIU from the host 410 and transmit the response RESP UPIU to the host 410. The response RESP UPIU may include the GC information in the EHS region of the response RESP UPIU transmitted to the host 410. The host 410 may store the received GC information in the first queue 413. The host 410 may further extract the time information Time Info indicating the time point at which the GC information has been received and store the extracted time information Time Info in the storage circuit 412. The host 410 may retrieve the GC information stored in the first queue 413, include the retrieved GC information in the EHS region of the command CMD UPIU to be transmitted to at least one of the second to N^{th} storage devices 421_2 through 421_N. The host 410 may further determine whether to include the GC information in the command CMD UPIU based on comparison result between the elapsed time and predetermined effective time.

In the header region of the UPIU exchanged between the host 410 and the first to N^{th} storage devices 421_1 to 421_N, the ID value indicating the destination storage device to which the GC information is to be transmitted may be included. The ID value corresponding each storage device may be stored in each storage device, and the ID values of one or more storage devices may be included in the UPIU. For example, when the GC information is transmitted from the first storage device 421_1 to two or more storage devices, two or more ID values may be included in the header region of the UPIU.

In addition, the GC information from the first storage device 421_1 may be broadcast to all other storage devices included in a memory package 420, and the ID value is set to indicate broadcasting of the GC information to all other storage devices . Alternatively, when the ID value indicating a particular storage device is included in the header region of the UPIU, while the GC information from the storage device 1 421_1 is transmitted to a particular storage device among the second to N^{th} storage devices N^{th} 421_2 to 421_N, the preset ID value indicating the destination storage device is included in the header region of the UPIU, as the GC information is transmitted to corresponding storage device among the second to N^{th} storage devices 421_2 to 421_N. The destination storage device may synchronize the GC operation to the GC operation of the first storage device 421_1.

In addition, a storage device having received the GC information among the storage devices second to N^{th} storage devices 421_2 to 421_N may transmit the response RESP UPIU including the internal response Int_Resp to the host 410, and the internal response Int_Resp may be stored in the second queue 414. The internal response Int_Resp may be retrieved from the second queue 414, and the retrieved internal response Int_Resp may be included in the EHS region of the command CMD UPIU to be transmitted to the first storage device 421_1.

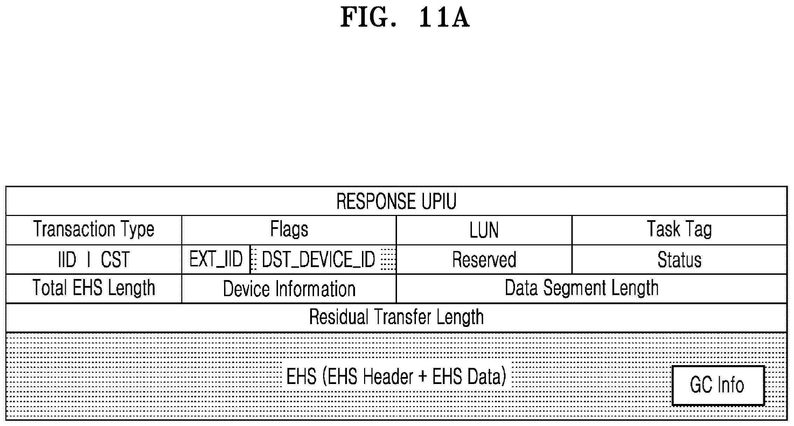

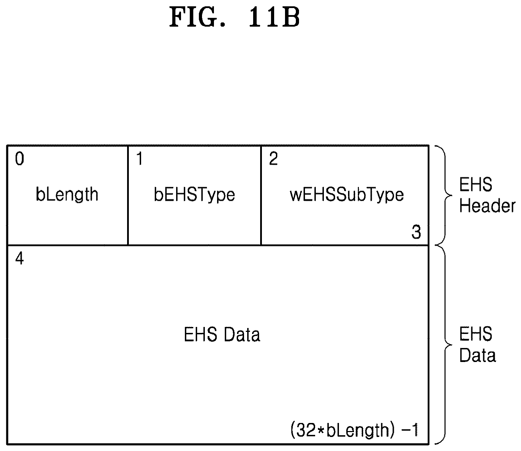

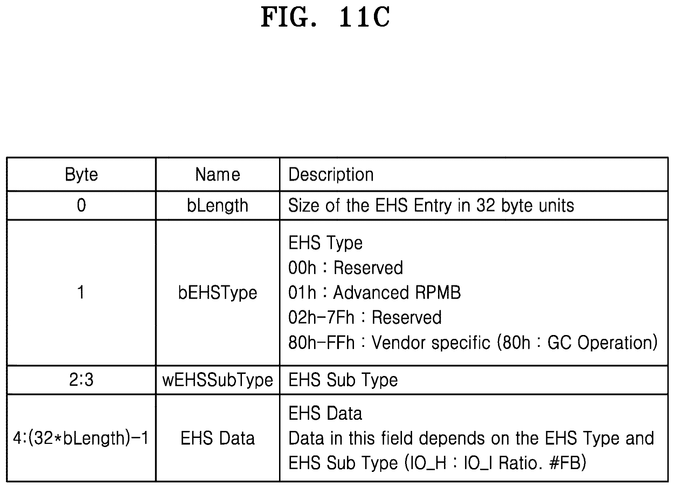

FIGS. 11A, 11B, and 11C are tables of implementation examples of the UPIU according to embodiments. The illustrated fields of the UPIU in FIGS. 11A, 11B, and 11C correspond to the fields defined in the UFS interface standard.

FIG. 11A illustrates the header region and the EHS region of the UPIU. The header region of the response RESP UPIU includes multiple fields such as a transaction type field, a logical unit number (LUN) field indicating the LUN to which the request is targeted, a task tag field related to the task request, a device information field indicating device level information, a total EHS length field indicating the size of the EHS region, and a data segment length field indicating the number of valid bytes in the data segments of the UPIU. GC information according to embodiments of the inventive concept may be included in the EHS region.

Some fields of the header region of the UPIU may correspond to a reserved region. The ID value indicating the destination storage device and/or the source storage device according to the embodiment may be included in the header region of the UPIU. For example, the ID value may be included in the reserved region. In addition, although not illustrated in FIG. 11A, a value indicating a format of the GC Information may also be included in the reserved region of the header region of the UPIU.

FIG. 11B illustrates an example of the EHS region of the UPIU, and the EHS region may include an EHS header region and an EHS data region. The GC Information and the internal response communicated between the storage devices may be included in the EHS data region of the EHS region. For example, the EHS region may have a size of 32 bytes, and the EHS header region may have a size of 4 bytes. The remaining 28 bytes of the EHS region may correspond to the EHS data region. Each of the fields of the EHS header region may include various types of values. For example, the fields of the EHS header region may include a bLength field storing a value indicating the size of the EHS data region, a bEHSType field and a wEHSSubType field indicating types of information stored in the EHS data region.

Referring to FIG. 11C, in the bEHSType field, values indicating the format and the characteristics of information stored in the EHS data region are stored. For example, some values (for example, 80h to FFh) defined in bEHSType field may correspond to a vendor unique value, and some of the vendor unique values may be related to the GC Information according to embodiments.

For example, the value of 80h in the bEHSType field may indicate that information stored in the EHS data region is information related to the GC operation, and detailed GC Information GC Info related to the GC operation may be stored in the EHS data region. Information indicating a ratio of the host input/output IO_H operation to the internal input/output IO_I operation, information about the number of free blocks, or the like may be included in the EHS data region. A destination storage device may determine that a source storage device is performing a GC operation based on values stored in the EHS region, determine processing performance of the storage device with respect to a host request, and synchronize the GC operation to the source storage device. As shown in FIG. 11C, values defining the GC operation may be set in the vendor unique value of the bEHSType field. Additionally, values indicating various operations, such as the reclamation operation and a wear-leveling operation may be defined in the vendor unique value.

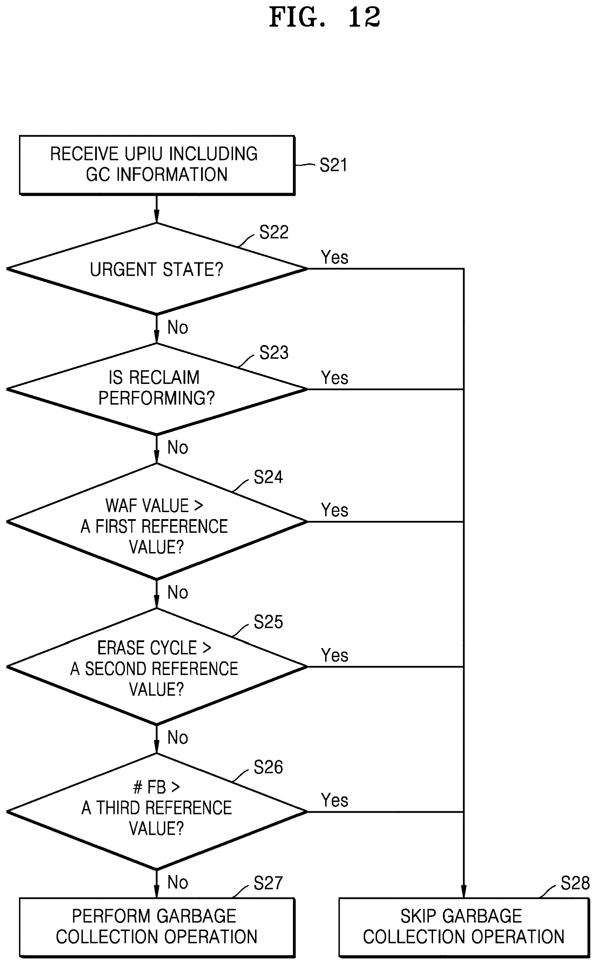

FIGS. 12 to 14, 15A and 15B are diagrams of examples of operation of a storage system, according to embodiments.

FIG. 12 illustrates an example of determining by a storage device having received the GC Information whether to perform the GC operation. For example, the storage device may be in various different conditions, and upon receiving the GC Information from another storage device, the storage device, based on the various conditions, may determine whether to perform the GC operation in synchronization with the GC operation of another storage device or to skip the GC operation .

For example, the storage device may receive the UPIU including the GC Information (S21), and may may identify whether the storage device is in an urgent state (S22). When the storage device is identified as not in the urgent state, the storage device may consider one or more conditions to determine whether to perform the GC operation included in the command UPIU. For example, one or more conditions may include a reclamation operation. The storage device may perform the reclamation operation, in which the storage device may copy data stored in a particular block to be erased for turning into a free block to another block. For best securing reliability of the data, the reclamation operation should be performed at a time without being intervened by other operations. Therefore, when the storage device is performing the reclamation operation, the storage device may not perform the GC operation regardless of the GC information included in the UPIU received from another storage device (S23).

In addition, the storage device may calculate a write amplification factor (WAF) value. The WAF value may indicate a ratio of an amount of data programmed in the NAND memory of the storage device to an amount of data provided to the storage device by a host. For example, when a background operation performs a write operation of data regardless of a request from the host, the WAF value becomes small. On the contrary, when the size of data (for example, request unit) provided by the host is smaller than a write unit of the storage device, an amount of data to be programmed in the NAND memory may become larger compared with the amount of data provided by the host, leading to increase of the WAF value. In addition, the WAF value may increase due to various reasons in the storage device. When the WAF value of the storage device is large, a frequency of the I/O operation for processing a request from the host may be decreased, and accordingly, processing performance of data access according to the host request may be deteriorated. For preventing the performance degradation due to the large WAF value, the storage device may skip the GC operation regardless of the GC information included in the UPIU received from another storage device when the WAF value of the storage device is larger than a first reference value (S24).

In addition, the storage device may count a number of program/erase cycles of the storage device, and as the number of program/erase cycles is increased in the storage device, a lifetime of the storage device may be reduced. Because GC operation requires additional program/erase cycles in the storage device, the storage device may determine to skip the GC operation regardless of the GC information included in the UPIU received from another storage device when the number of program/erase cycles is greater than a second reference value (S25). In addition, when the storage device includes many free blocks, securing additional free blocks may be difficult or securing additional free blocks may not be necessary. Therefore, the storage device may determine to skip the GC operation regardless of the GC information included in the UPIU received from another storage device when the number of free blocks in the storage device is greater than a third reference value (S26)

According to an embodiment, when at least one condition among conditions described above is satisfied, the storage device may determine to skip the GC operation regardless of the GC information included in the UPIU received from another storage device. For example, the storage device may compare the WAF value to a first reference value (S24), compare the erase cycle to a second reference value (S25), and compare the number of free blocks to a third reference value (S26) for determining whether to skip the GC operation. When the WAF value is greater than the first reference value, the erase cycle is greater than the second reference value, or the number of free blocks is greater than the third reference value, the GC operation may be skipped (S28). When the conditions described above are not satisfied, the storage device may determine to perform the GC operation (S27) based on the GC information included in the UPIU received from another storage device.

Although some conditions are illustrated in FIG. 12, the inventive concept is not limited thereto. Any one or only some conditions may be applied, or other conditions, not illustrated in FIG. 12, may be applied to determine whether the storage device to perform the GC operation in synchronization with the GC operation of another storage device.

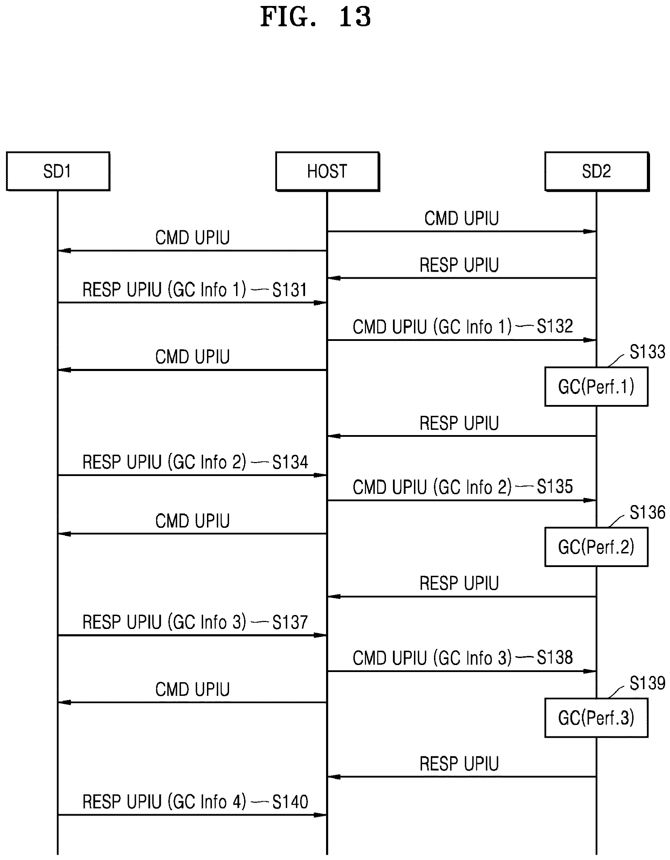

FIG. 13 illustrates characteristics of the processing performance of the host request being adjusted while the GC operation is performed.

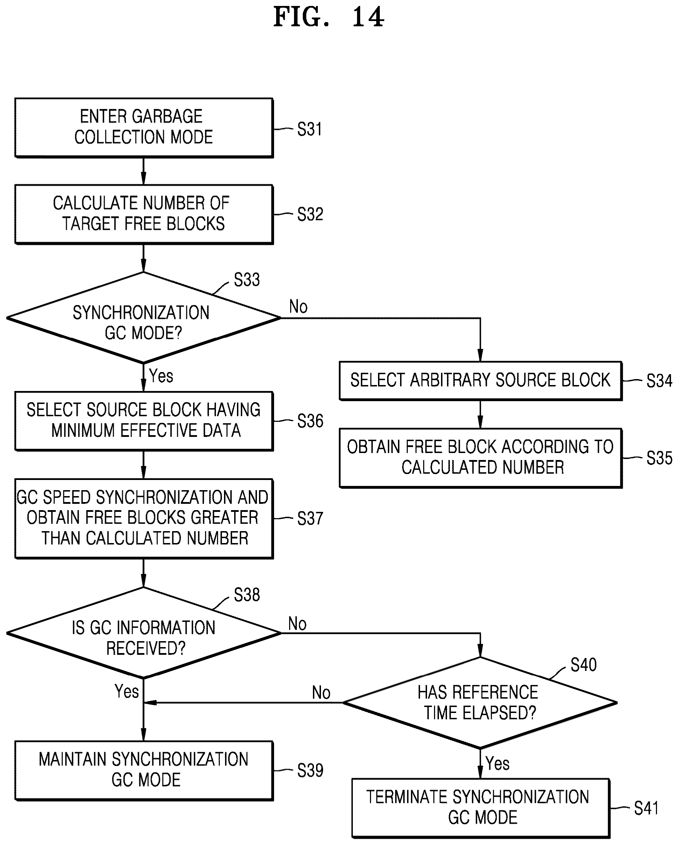

The host may frequently exchange the UPIU for the data access with the first and second storage devices SD1 and SD2 as illustrated in FIG. 14. Although the command CMD UPIU and the response RESP UPIU are illustrated, other types of UPIU may also be communicated. The host may transmit the command CMD UPIU to the first and second storage devices SD1 and SD2, receive the response RESP UPIU from the first and second storage devices SD1 and SD2. When the GC operation is triggered in the first storage device SD1, the first storage device SD1 may transmit the response RESP UPIU including first GC Information to the host (S131). The first GC information is also referred to as GC Infor 1. In addition, the host may transmit the command CMD UPIU including the first GC Information to the second storage device SD2 (S132). The second storage device SD2 may process the host request according to first processing performance Perf.1 while processing the GC operation based on the first GC Information (S133).

The first storage device SD1 may include second GC Information, also referred to as GC Info 2, in the next response RESP UPIU to be sent to the host (S134), and the host may transmit the command CMD UPIU including the second GC Information to the second storage device SD2 (S135). As the processing performance is changed in the first storage device SD1, the second GC Information may include information different from the first GC Information, and the second storage device SD2 may change the processing performance for the host request to a second processing performance Perf.2 while the GC operation is performed (S136). Likewise, the first storage device SD1 may transmit the response RESP UPIU including third GC Information, also referred to as GC Info 3, to the host (S137), and the host may transmit the command CMD UPIU including the third GC Information GC Info 3 to the second storage device SD2 (S138). The second storage device SD2 may change the processing performance for the host request to third processing performance Perf.3 while the GC operation is performed (S139).

FIG. 14 is a flowchart of the GC operation synchronized to another storage device. For example, the second storage device SD2 may perform the GC operation based on the GC Information received from the first storage device SD1.

The second storage device SD2 may enter into a GC mode (S31), and calculate the number of target free blocks indicating the number of free blocks required to be generated in the GC mode (S32). For example, the number of free blocks consumed during a predetermined time period may correspond to the number of target free blocks.

According to whether the GC Information has been received from the first storage device SD1, the second storage device SD2 may determine whether the GC mode is a synchronization GC mode, in which GC operation is performed in synchronization with the GC operation of the first storage device SD1 (S33). When the GC mode is not the synchronization GC mode, the second storage device SD2 may select source blocks (S34) with which the second storage device SD2 may secure free blocks according to the number of target free blocks during the predetermined time period while the GC operation is performed (S35).

On the other hand, when the GC mode is the synchronization GC mode, the second storage device SD2 may select two or more source blocks containing the least amount of effective data (S36). In addition, while the GC operation is performed, the performance of the second storage device SD2 (for example, host request processing speed or GC operation speed) may be synchronized to the performance of the first storage device SD1. When the performance of the first storage device SD1 is less than the performance of the second storage device SD2, the second storage device SD2 may generate the greater number of the free blocks than the number of calculated target free blocks while the GC operation is performed (S37). For example, the second storage device SD2 may lower its performance to be synchronized to the performance of the first storage device SD1, and the GC operation may be performed at a speed which is faster than the GC speed for generating the free blocks corresponding to the number of target free blocks. In addition, when the GC operation is performed on the source blocks containing less amount of effective data, the second storage device may secure greater number of free blocks than the number of target free blocks may be obtained (S37).

The second storage device SD2 may perform the GC operation according to the GC Information received sequentially from the first storage device SD1, and may change the GC speed based on the received GC Information. Accordingly, the second storage device may determine whether the GC Information is received (S38), and upon determining that the GC Information is received, the synchronization GC mode may be maintained (S39). On the other hand, upon determining that the GC Information GC Info is not received, the second storage device SD2 may further determine whether a time period during which the synchronization GC mode has been maintained exceeds a predetermined reference time (S40). When the time period during which the synchronization GC mode has been maintained does not exceed the reference time, the synchronization GC mode may be maintained. On the other hand, when the time period during which the synchronization GC mode has been maintained exceeds the reference time, the synchronization GC mode may be terminated (S41).

According to an embodiment, the second storage device SD2 may obtain many free blocks in the synchronization GC mode, and accordingly, may process the host request at a high performance level without entering into the GC mode for a sufficient period of time after a synchronization GC mode is completed. In addition, although the GC Information is not continuously received from the first storage device SD1, by maintaining the synchronization GC mode during the predetermined reference time, a sufficient number of free blocks may be obtained. In addition, because the synchronization GC mode is maintained during the predetermined reference time, unnecessary entering/exiting the synchronization GC mode for a short period of time may be prevented. According to an embodiment, because a time section in which the host request is processed at a high performance level, along with increasing a time section in which the first and second storage devices SD1 and SD2 perform the GC operation in parallel, overall performance of the system employing the storage devices may be improved.

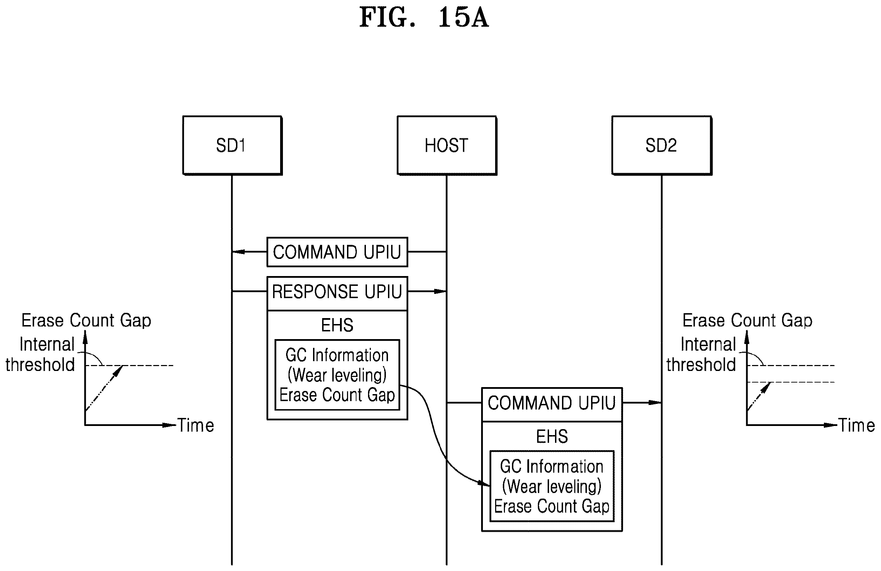

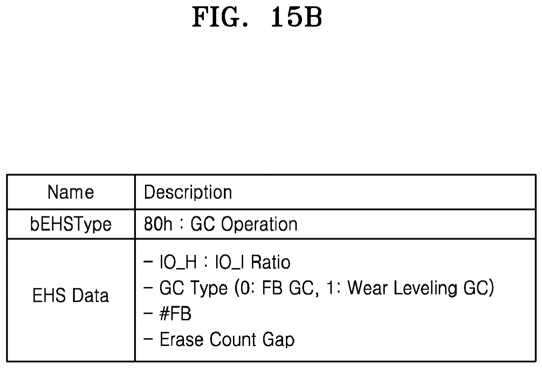

FIGS. 15A and 15B illustrate an example in which the embodiments of the inventive concept are applied to different background operations such as a wear leveling GC operation.

The storage devices may perform a wear leveling operation to control lifetime of blocks uniformly by controlling erase counts of blocks in a storage device. The wear leveling GC operation may be an example of the wear leveling operation, in which the wear leveling GC operation may select source blocks with relatively lower erase counts , and select target blocks with relatively greater erase counts. According to an embodiment of the inventive concept, multiple storage devices may exchange GC Information related to the wear leveling GC operation, and one storage device may perform the wear leveling GC operation in synchronization with GC operation of another storage device.

For example, the storage devices may evaluate an erase count gap, in which the erase count gap may indicate the difference between the erase count of the most erased block and the erase count of the least erased block. When the difference exceeds a predetermined threshold value, the wear leveling GC operation may be triggered. For example, when the first storage device SD1 triggers the wear leveling GC operation, the first storage device SD1 may transmit the UPIU including the GC information related to the wear leveling GC operation to the host, and the host may transmit the UPIU including the GC information to the second storage device SD2.

As illustrated in FIG. 15A, the GC information may include information related to the wear leveling GC operation of the first storage device SD1, for example, the erase count gap may be included in the GC information. The second storage device SD2, based on the received GC information from the first storage device SD1, may trigger the wear leveling GC operation in synchronization with the GC operation of the first storage device SD1, even when the erase count gap of the second storage device SD2 does not exceed a threshold value.

FIG. 15B illustrates an example of the GC Information included in the EHS region. For example, in the bEHSTtype field, a value indicating the GC operation may be defined, and in the EHS data region, various information, such as a ratio of the host input/output IO_H to the internal input/output IO_I, the type of GC operation (for example, wear leveling GC operation), the number of free blocks of the first storage device SD1, and the erase count gap, may be included.

According to an embodiment, a storage device may perform various background operations in synchronization with background operations of another storage device. For example, the second storage device SD2 may uniformly control the lifetime of blocks by performing the wear leveling GC operation in synchronization of the GC operation of the first storage device SD1. In addition, because the first storage device SD1 may not perform the wear leveling GC operation for a sufficient period of time after the synchronized wear leveling GC operation is performed, the first and second storage devices SD1 and SD2 may secure a sufficient time section in which both the first and second storage devices SD1 and SD2 perform operations for processing requests from the host at high performance level.

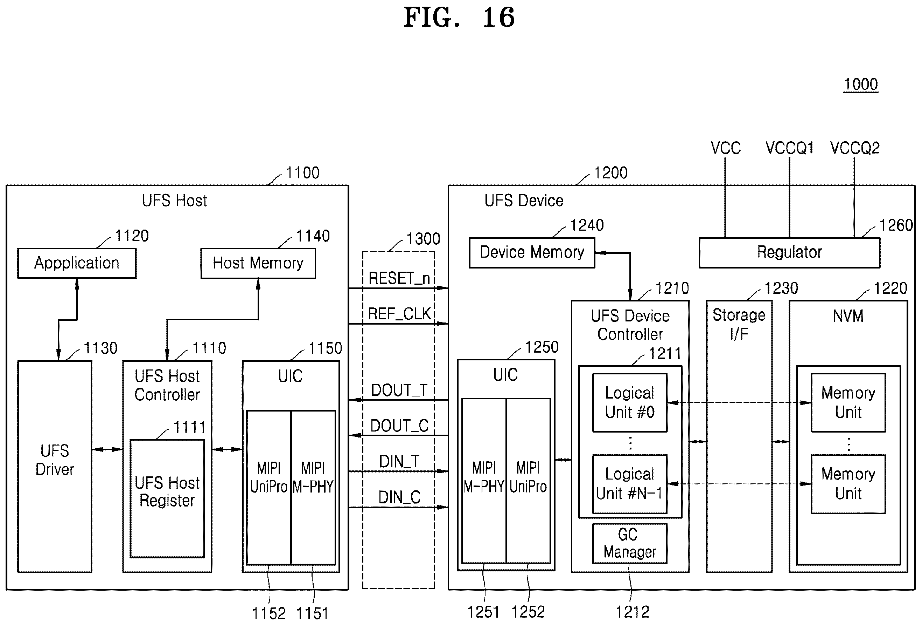

FIG. 16 is a diagram of a UFS system 1000 according to an embodiment. The UFS system 1000 may correspond to a storage system described above, and as a system in compliance with the UFS standard issued by the Joint Electron Device Engineering Council (JEDEC), may include a UFS host 1100, a UFS device 1200, and a UFS interface 1300. In addition, the UFS device 1200 may include a storage device described above.

Referring to FIG. 16, the UFS host 1100 may be interconnected to the UFS device 1200 via the UFS interface 1300. The UFS host 1100 may include a UFS host controller 1110, an application 1120, a UFS driver 1130, a host memory 1140, and UFS interconnect (UIC) layer 1150. The UFS device 1200 may include a UFS device controller 1210, a non-volatile memory (NVM) 1220, a storage interface (I/F) 1230, a device memory 1240, a UIC layer 1250, and a regulator 1260. The NVM 1220 may include a plurality of memory units. The storage I/F 1230 may be implemented in compliance with the standard specification, such as Toggle and open NAND flash interface (ONFI).

The application 1120 may store a program for communication with the UFS device 1200 to utilize functions of the UFS device 1200. The application 1120 may transmit an input/output request to the UFS driver 1130 for input/output operation with respect to the UFS device 1200. The input-output request may include a read request, a write request, an erase request, or the like of data, but is not limited thereto.

The UFS driver 1130 may control the UFS host controller 1110 via a UFS-host controller interface (HCI). The UFS driver 1130 may convert the input-output request generated by the application 1120 into a UFS command defined by the UFS standard, and transfer the converted UFS command to the UFS host controller 1110. One input-output request may be converted into a plurality of UFS commands. The UFS command may include a command defined by the small computer system interface (SCSI) standard, but may also include a command dedicated to the UFS standard.

The UFS host controller 1110 may transmit the UFS command converted by the UFS driver 1130 to the UIC 1250 of the UFS device 1200 via the UIC 1150 and the UFS interface 1300. In this process, a UFS host register 1111 of the UFS host controller 1110 may function as a command queue CQ.

The UIC 1150 on the side of the UFS host 1100 may include a MIPI M-PHY 2151 and MIPI UniPro 1152, and the UIC 1250 on the side of the UFS device 1200 may also include the MIPI M-PHY 2151 and the MIPI UniPro 1152.

The UFS interface 1300 may include a line transmitting a reference clock REF_CLK, a line transmitting a hardware reset signal RESET_n for the UFS device 1200, a pair of lines transmitting a differential input signal pair DIN_T and DIN_C, and a pair of lines transmitting a differential output signal pair DOUT_T and DOUT_C.

A frequency value of the reference clock REF_CLK provided to the UFS device 1200 by the UFS host 1100 may include one of four values which is 19.2 MHz, 26MHz, 38.4 MHz, or 52 MHz, but is not necessarily limited thereto. During an operation, even while exchanging data between the UFS host 1100 and the UFS device 1200 is performed, the UFS host 1100 may change the frequency value of the reference clock REF_CLK. By using a phase-locked loop (PLL) or the like, the UFS device 1200 may generate various frequency clocks from the reference clock REF_CLK provided by the UFS host 1100. In addition, the UFS host 1100 may also set a data rate value between the UFS host 1100 and the UFS device 1200 by using the frequency value of the reference clock REF_CLK. Accordingly, the data rate value may be determined based on the frequency value of the reference clock REF_CLK.

The UFS interface 1300 may support multiple lanes, and each lane may be implemented as a differential pair. For example, the UFS interface may include one or more receive lanes and one or more transmit lanes. In FIG. 16, a line pair transmitting the differential input signal pair DIN_T and DIN_C may constitute the receive lanes, and a line pair transmitting the differential output signal pair DOUT_T and DOUT_C may constitute the transmit lanes. FIG. 16 illustrates one transmit lane and one receive lane, but the number of transmit lanes and receive lanes may not be limited to one.

The receive lane and the transmit lane may transmit data in a serial communication manner, and by using a structure in which the receive lane is separated from the transmit lane, communication in a full-duplex manner between the UFS host 1100 and the UFS device 1200 may be possible. Therefore, even while receiving data from the UFS host 1100 via the receive lane, the UFS device 1200 may transmit data to the UFS host 1100 via the transmit lane. In addition, control data such as a command from the UFS host 1100 to the UFS device 1200, and user data that the UFS host 1100 intends to store in the NVM 1220 of the UFS device 1200 or read from the NVM 1220 may be transmitted via the same lane. Accordingly, between the UFS host 1100 and the UFS device 1200, it is not necessary to provide a separate lane for data transmission except for a pair of receive lanes and a pair of transmit lanes.

The UFS device controller 1210 of the UFS device 1200 may control an overall operation of the UFS device 1200. The UFS device controller 1210 may control the NVM 1220 by using logical units LU 1211 which logical data storage units. The number of LU 1211 may be eight, but is not limited thereto. The UFS device controller 1210 may include a flash translation layer (FTL), and by using address mapping information of the FTL, may convert a logical data address, for example, a logical block address (LBA), transferred by the UFS host 1100, into a physical data address, for example a physical block address (PBA). In the UFS system 1000, the logical block for storing the user data may have a size of a specific range. For example, the minimum size of the logical block may be 4K bytes. In addition, a GC manager 1212 preparing and processing the GC Information may be included in the UFS device controller 1210. In addition, the UFS device controller 1210 may control the GC operation on the NVM 1220 by being synchronized to the GC operation of the external storage device.

When a command from the UFS host 1100 is input into the UFS device 1200 via the UIC 1250, the UFS device controller 1210 may perform an operation according to the input command, and when the operation is completed, may transmit a completion response to the UFS host 1100.

The UFS host 1100 may store commands to be transmitted to the UFS device 1200 in the UFS host register 1111 which may function as the command queue, and may transmit the commands to the UFS device 1200 in sequence. Accordingly, when a message that processing of the previously transmitted command has been completed is received or even when the command previously transmitted is still in process by the UFS device 1200, the UFS host 1100 may transmit a next command on standby in the command queue to the UFS device 1200, and accordingly, the UFS device 1200 may receive the next command from the UFS host 1100 even while the previously transmitted command is in process. The maximum number of commands to be stored in the command que which may be referred to as a queue depth, may be, for example, 32. In addition, the command queue may be implemented as a circular queue type in which the start and the end of a command column stored in the queue are indicated by using a head pointer and a tail pointer respectively.

In the UFS device 1200, VCC, VCCQ, and VCCQ2 may be power voltages. The VCC may have a value of 2.4 V to 3.6 V as a main power voltage. The VCCQ may be provided mainly for the UFS device controller 1210 as a power voltage for supplying a voltage of a low range, and may have a value of 1.14V to 1.26 V. The VCCQ2 may be provided mainly for the input-output interface such as the MIPI M-PHY 1251 as a power voltage for supplying a voltage lower than the VCC but higher than the VCCQ, and may have a value of 1.7V to 1.95 V. The power voltages may be supplied for each component of the UFS device 1200 via the regulator 1260. The regulator 1260 may be implemented as a combination of unit regulators connected to different power voltages described above.

While the inventive concept has been particularly shown and described with reference to embodiments thereof, it will be understood that various changes in form and details may be made therein without departing from the scope of the following claims.

## Claims

1. An operating method of a storage device (SD2) configured to communicate with a host, the method comprising:
receiving (S113, S123) first data from the host;
extracting background information from the received first data, the background information being generated in an external storage device (SD1) and related to a first background operation performed in the external storage device (SD1); and
based on the background information, triggering a second background operation on one or more memory devices included in the storage device (SD2),
wherein the storage device (SD2) processes a request from the host according to a performance level which is set based on the background information during a time section from triggering of the second background operation to completion of the second background operation.

2. The method of claim 1, wherein the background information comprises garbage collection, GC, information indicating that a first GC operation is being performed in the external storage device (SD1), and wherein the storage device (SD2) performs a second GC operation on the one or more memory devices, based on the GC information.

3. The method of claim 2, wherein the GC information comprises first information indicating a first performance ratio of an internal input/output, IO, operation related to the first GC operation to a host IO operation related to processing a request from the host, performed in the external storage device (SD1), and wherein the storage device (SD2) processes a request from the host according to a second performance ratio which is set based on the first information.

4. The method of claim 3, wherein the storage device (SD2) determines performance level of the external storage device (SD1) processing a request from the host, based on the first information, and when performance level of the storage device (SD2) is less than performance level of the external storage device (SD1), the storage device (SD2) does not trigger the background operation corresponding to the background information.

5. The method of any preceding claim, wherein the background information comprises first information indicating a performance ratio of an internal input/output, IO, operation related to the first background operation to a host IO operation related to processing a request from the host, in which both the internal IO operation and the host IO operation are performed in the external storage device (SD1), and wherein the storage device (SD2) sets a performance speed of the background operation based on the first information.

6. The method of any preceding claim, wherein the storage device (SD2) performs communication with the host in accordance with a universal flash storage, UFS, interface standard, and wherein the first data is a command UFS protocol information unit, UPIU, defined by the UFS interface standard.

7. The method of claim 6, further comprising:
generating an internal response in response to reception of the background information; and
including the internal response in a response UPIU transmitted (S124) to the host in response to reception of the command UPIU.

8. The method of claim 6 or 7, wherein the first data comprises a header region and an extra header segment, EHS, region, as defined in the UFS interface standard, and wherein the background information is extracted from the EHS region.

9. A storage device comprising:
a non-volatile memory device; and
a memory controller (200) configured to exchange data in a form of a universal flash storage, UFS, protocol information unit, UPIU, with a host in accordance with a UFS interface standard,
wherein the memory controller (200) comprises:
a packet manager (240) configured to process first data received from the host and generate second data transmitted to the host; and
a garbage collection, GC, manager (250) configured to extract, from the first data, GC information generated by an external storage device (SD1) and indicating that a first GC operation is being performed in the external storage device (SD1),
wherein the memory controller (200) is configured to trigger a second GC operation on the non-volatile memory device in synchronization with the first GC operation of the external storage device (SD1) based on the GC information.

10. The storage device of claim 9, wherein the GC information comprises first information indicating a performance ratio of an internal input/output, IO, operation related to the first GC operation to a host IO operation related to processing a request from the host, performed in the external storage device (SD1), and wherein the storage device processes a request from the host according to a first performance level set based on the first information, during a time section from triggering of the GC operation to completion of the GC operation.

11. The storage device of claim 10, wherein the storage device processes the request from the host, based on second performance level different from the first performance level, according to the GC information extracted from third data sequentially received from the host after the first data.

12. The storage device of claim 10 or 11, wherein the storage device determines performance level of the external storage device (SD1) processing a request from the host, based on the first information, and when performance level of the storage device is lower than performance level of the external storage device (SD1), the GC operation in response to the GC information is not triggered.

13. The storage device of any of claims 9 to 12, wherein the first data comprises a header region and an extra header segment, EHS, region defined by the UFS interface standard, and wherein the GC information is extracted from the EHS region.

14. The storage device of any of claims 9 to 13, wherein, when a number of free blocks of the storage device is reduced to less than a threshold value and the GC operation is triggered, the GC manager (250) is configured to generate GC information indicating that the GC operation is being performed in the storage device (SD2), and wherein the packet manager (240) includes, in the second data, the GC information generated by the GC manager (250).

15. The storage device of any of claims 9 to 14, wherein the second GC operation of the storage device performed in synchronization with the GC operation of the external storage device (SD1) overlaps with at least a portion of the first GC operation of the external storage device (SD1).
